# EUROPEAN PATENT APPLICATION

(11) **EP 4 525 174 A1**
(43) Date of publication of application: **19.03.2025**
(21) Application number: 23802992.0
(22) Date of filing: 11.05.2023
(51) Int. Cl.: H01M 50/367, H01M 50/342

(54) **BATTERY CELL, BATTERY PACK AND VEHICLE**

(30) Priority: 12.05.2022 CN 202221129270 U
(71) Applicant: BYD Company Limited, Shenzhen, Guangdong 518118 (CN)
(72) Inventor: YUAN, Wansong, Shenzhen, Guangdong 518118 (CN); WANG, Xinyue, Shenzhen, Guangdong 518118 (CN); CHEN, Chong, Shenzhen, Guangdong 518118 (CN); DUAN, Pingan, Shenzhen, Guangdong 518118 (CN); ZHANG, Da, Shenzhen, Guangdong 518118 (CN)
(74) Representative: Mathys & Squire
(86) International application number: PCT/CN2023/093477
(87) International publication number: WO 2023/217223

(57) **Abstract**

A battery cell (1), a battery pack (2) and a vehicle (4). The battery cell (1) comprises: a housing (100), which is provided with an inner cavity (110), and a first side wall (120) and a second side wall (130), which are opposite each other, wherein an inner wall surface of the second side wall (130) is configured to have a recess (140), which is recessed in a direction facing away from the inner cavity (110), the recess (140) forms an air exhaust passage (150) in the inner cavity (110), and the second side wall (130) is provided with an explosion-proof hole (160), which corresponds to the air exhaust passage (150) in terms of position; a terminal (200), which is arranged on a side wall of the housing (100) other than the second side wall (130); an explosion-proof valve (300), which is mounted on the second side wall (130) and is used for covering the explosion-proof hole (160); and an electrode core (400), which is arranged inside the housing (100) and is spaced apart from the explosion-proof hole (160).

## Description

### CROSS-REFERENCE TO RELATED APPLICATIONS

The present disclosure claims priority to Chinese Patent Application No. "202221129270.9" filed by BYD Company Limited on May 12, 2022 and entitled "BATTERY CELL, BATTERY PACK, AND VEHICLE".

### FIELD

The present disclosure relates to the technical filed of vehicle technologies, and specifically, to a battery cell, a battery pack and a vehicle.

### BACKGROUND

In related art, a terminal post and an explosion-proof valve of a battery cell are generally arranged at the same end. When the battery cell experiences thermal runaway, the ejected high-temperature gas or flame will easily burn the terminal post of the battery cell and devices connected thereto, causing high-voltage arc discharge or secondary harm.

Alternatively, the battery cell is arranged with a boss, the boss protrudes toward the inside of the battery cell, the explosion-proof valve is arranged on the boss, and the explosion-proof valve is spaced apart from the terminal post. However, the arrangement of the boss will cause the internal space of the battery cell to become smaller. Moreover, the electrode core of the battery cell will directly abut against the boss, whereby the explosion-proof hole is blocked by the electrode core, and the gas inside the battery can't be flowed to the outside normally, resulting in a poor explosion-proof effect.

### SUMMARY

The present disclosure aims to solve at least one of the technical problems in the related art. To this end, an object of the present disclosure is to provide a battery cell. The battery cell has the advantages of high safety, large space and smooth gas flow.

The present disclosure further provides a battery pack having the battery cell.

The present disclosure further provides a battery pack having the battery cell or the battery pack.

According to an embodiment in a first aspect of the present disclosure, a battery cell includes a housing, having an inner cavity, and a first side wall and a second side wall opposite to each other, where an inner wall surface of the second side wall is configured with a recess, the recess is recessed in a direction facing away from the inner cavity, the recess forms a gas exhaust passage in the inner cavity, and the second side wall is provided with an explosion-proof hole corresponding in position to the gas exhaust passage; a terminal post, where the terminal post is arranged on a side wall of the housing other than the second side wall; an explosion-proof valve, where the explosion-proof valve is mounted on the second side wall, and the explosion-proof valve is configured to cover the explosion-proof hole; and an electrode core, where the electrode core is arranged in the housing, and the electrode core is spaced apart from the explosion-proof hole.

The battery cell according to the embodiment of the present disclosure has the advantages of high safety, large space and smooth gas flow.

According to some exemplary embodiments of the present disclosure, the recess has a first inner wall, a bottom wall and a second inner wall connected in sequence. The first inner wall extends from an end away from the bottom wall to an end connected to the bottom wall gradually along a direction away from the first side wall. The second inner wall extends from an end away from the bottom wall to an end connected to the bottom wall gradually along a direction away from the first side wall. The extending direction of the bottom wall is the same as the extending direction of the second side wall.

According to some exemplary embodiments of the present disclosure, an outer wall surface of the second side wall is configured with a protrusion. The protrusion protrudes in a direction facing away from the inner cavity, the protrusion corresponds in position to the recess, and the explosion-proof hole penetrates through the protrusion and the recess.

According to some exemplary embodiments of the present disclosure, the thickness of the second side wall at the protrusion and the recess is the same as that at other positions.

According to some exemplary embodiments of the present disclosure, the protrusion and the recess are located at a center of the second side wall in a length direction of the second side wall.

According to some exemplary embodiments of the present disclosure, the protrusion has a first side surface, a top surface and a second side surface connected in sequence. The first side surface extends from an end away from the top surface to an end connected to the top surface gradually along a direction away from the first side wall. The second side surface extends from an end away from the top surface to an end connected to the top surface gradually along a direction away from the first side wall. The extending direction of the top surface is the same as the extending direction of the second side wall.

According to some exemplary embodiments of the present disclosure, two opposite side surfaces of the protrusion in a width direction of the second side wall are respectively leveled with two opposite side surfaces of the housing in the width direction of the second side wall.

According to some exemplary embodiments of the present disclosure, the explosion-proof valve is arranged on the protrusion or the recess.

According to some exemplary embodiments of the present disclosure, the battery cell further includes: a protective sheet. The protective sheet is connected to the housing and located at a side of the explosion-proof valve facing away from the inner cavity.

According to some exemplary embodiments of the present disclosure, the battery cell further includes: an insulating film. The insulating film is arranged in the inner cavity, and the insulating film is located between at least a part of the inner cavity and the explosion-proof valve.

According to some exemplary embodiments of the present disclosure, the dimension of the electrode core in a length direction of the recess is L₁, and the length of the recess is L₂, where L₁ and L₂ meet: 0.04≤L₂/L₁≤0.96.

According to some exemplary embodiments of the present disclosure, L₁ and L₂ further meet: L₁≤500mm, and L₂≥20mm.

According to some exemplary embodiments of the present disclosure, the second side wall has a first support member and a second support member. The first support member and the second support member are respectively located at two sides of the recess in the length direction of the second side wall. The electrode core is supported on the first support member and the second support member. The length of each of the first support member and the second support member is (L₁-L₂)/2.

According to some exemplary embodiments of the present disclosure, the depth of the recess ranges from 0.5 mm to 3 mm.

According to some exemplary embodiments of the present disclosure, the explosion-proof hole is located at a center of the electrode core in a thickness direction; and/or, the explosion-proof hole is located at a center of the electrode core in the length direction of the second side wall.

According to some exemplary embodiments of the present disclosure, the terminal post includes a positive electrode terminal post and a negative electrode terminal post. The housing is an aluminum housing, the positive electrode terminal post is electrically connected to the housing, and a difference between the voltage of the positive electrode terminal post and the voltage of the housing is not less than 0 V and not greater than 2.5 V.

According to some exemplary embodiments of the present disclosure, the terminal post includes a positive electrode terminal post and a negative electrode terminal post. The housing is a steel housing, the negative electrode terminal post is electrically connected to the housing, and a difference between the voltage of the housing and the voltage of the negative electrode terminal post is not less than 0 V and not greater than 2.5 V.

According to some exemplary embodiments of the present disclosure, the housing includes: a housing body, where the second side wall and the inner cavity are formed on the housing body, the housing body is provided with an opening facing the second side wall, and the opening is in communication with the inner cavity; a housing cover, where the housing cover is mounted to the housing body, the housing cover covers the inner cavity, the first side wall is formed on the housing cover, and the terminal post is connected to the housing cover.

According to an embodiment in a second aspect of the present disclosure, a battery pack includes a box; and the battery cell according to the embodiment in the first aspect of the present disclosure, where the battery cell is mounted in the box, with the explosion-proof valve facing a bottom wall of the box.

The battery pack according to the embodiment in the second aspect of the present disclosure has the advantages of high safety, large space and smooth gas flow, by using the battery cell.

According to an embodiment in a third aspect of the present disclosure, a vehicle includes the battery cell according to the embodiment in the first aspect of the present disclosure or the battery pack according to the embodiment in the second aspect of the present disclosure, where the first side wall is located above the second side wall.

The vehicle according to the embodiment in the third aspect of the present disclosure has the advantages of high safety, large space and smooth gas flow, by using the battery cell or the battery pack.

Additional aspects and advantages of the present disclosure will be partly given in the following description, some of which will become apparent from the following description, or may be learned from practices of the present disclosure.

### BRIEF DESCRIPTION OF THE DRAWINGS

The above and/or other additional aspects and advantages of the present disclosure will become apparent and comprehensible from the description of embodiments in connection with accompanying drawings, in which: wherein
FIG. 1 is a schematic structural view of a battery cell according to an embodiment of the present disclosure.
FIG. 2 is a schematic structural view of a battery cell according to an embodiment of the present disclosure viewed from another perspective.
FIG. 3 is a cross-sectional view of a battery cell according to an embodiment of the present disclosure.
FIG. 4 is a partially enlarged view of an encircled part A in FIG. 3.
FIG. 5 is a partially enlarged view of an encircled part B in FIG. 3;
FIG. 6 is a schematic view of a battery pack according to an embodiment of the present disclosure.
FIG 7 is a schematic view of a vehicle according to an embodiment of the present disclosure.
FIG. 8 is a schematic view of a vehicle according to another embodiment of the present disclosure.

### List of reference numerals:

1 battery cell,
100 housing, 110 inner cavity, 120 first side wall, 130 second side wall, 131 first support member, 132 second support member, 140 recess, 141 first inner wall, 142 bottom wall, 143 second inner wall, 150 gas exhaust passage, 160 explosion-proof hole, 170 protrusion, 171first side surface, 172 top surface, 173 second side surface, 180 housing body, 190 housing cover,
200 terminal post, 210 positive electrode terminal post, 220 negative electrode terminal post, 300 explosion-proof valve, 400 electrode core, 500 insulating film,
2 battery pack, 3 box, 4 vehicle.

### DETAILED DESCRIPTION

Embodiments of the present disclosure will be described in detail below, and examples thereof are illustrated in the drawings, where the same or similar elements or the elements having the same or similar functions are denoted by the same or similar reference numerals throughout the description. The embodiments described below with reference to the accompanying drawings are exemplary and merely intended to explain the present disclosure, and cannot be construed as a limitation on the present disclosure.

In the descriptions of the present disclosure, it should be understood that the terms "center", "upper", "lower", "front", "rear", "left", "right", "vertical", "horizontal", "top" , "bottom", inner", "outer", and others indicate directional or position relations based on the directional or position relations shown in the drawings, and are merely provided for ease or brevity of description of the present disclosure, but do not necessarily mean or imply that the indicated device or component is provided in the specified direction or constructed or operated in the specified direction. Therefore, such terms should not be construed as limiting of the present disclosure.

It is to be understood that the terms "first" and "second" are used merely for the purpose of description, and shall not be construed as indicating or implying relative importance or implying a quantity of indicated technical features Therefore, a feature limited by "first" or "second" may explicitly or implicitly include one or more of the features. Further, in the descriptions of the present disclosure, unless otherwise indicated, "multiple" means two or more.

A battery cell 1 according to an embodiment of the present disclosure will be described below with reference to the accompanying drawings.

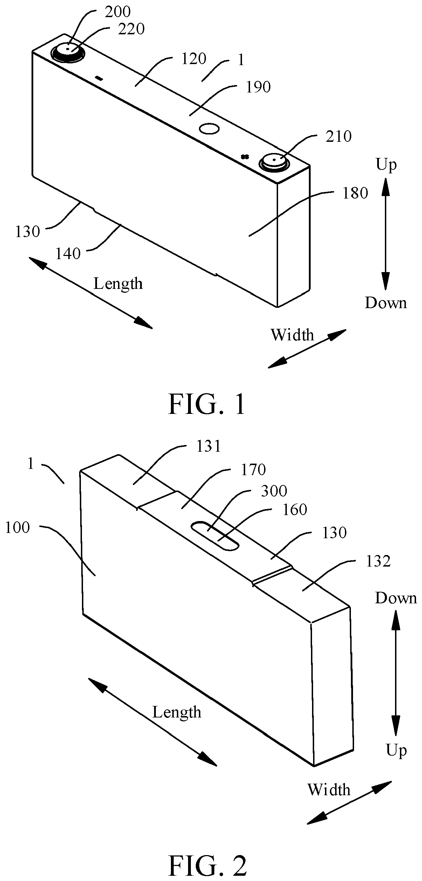

As shown in FIGs. 1 to 5, the battery cell 1 according to the embodiment of the present disclosure includes a housing 100, a terminal post 200, an explosion-proof valve 300, and an electrode core 400.

The housing 100 has an inner cavity 110, and a first side wall 120 and a second side wall 130 opposite to each other. An inner wall surface of the second side wall 130 is configured with a recess 140, and the recess 140 is recessed in a direction facing away from the inner cavity 110. The recess 140 forms a gas exhaust passage 150 in communication with the inner cavity 110, and the second side wall 130 is provided with an explosion-proof hole 160 in communication with the gas exhaust passage 150. The terminal post 200 is arranged on a side wall of the housing 100 other than the second side wall 130. The explosion-proof valve 300 is mounted on the second side wall 130, and the explosion-proof valve 300 is configured to cover the explosion-proof hole 160. The electrode core 400 is arranged in the housing 100, and the electrode core 400 is spaced apart from the explosion-proof hole 160.

The explosion-proof valve 300 has an explosion value. When the pressure in the inner cavity 110 of the battery cell 1 is less than the explosion value of the explosion-proof valve 300, the battery is in a normal working state. When the pressure in the inner cavity 110 is greater than or equal to the explosion value of the explosion-proof valve 300, the explosion-proof valve 300 is opened and the gas is rapidly discharged, to rapidly reduce the pressure in the inner cavity 110, and prevent the explosion of the battery cell 1. At this time, the explosion-proof valve 300 serves to prevent explosion.

To isolate the explosion-proof valve 300 from the electrolyte solution in the inner cavity 110, an insulating film 500 is further arranged in some embodiments of the present disclosure. The insulating film 500 is arranged in the inner cavity 110, and the insulating film 500 is located between at least a part of the inner cavity 110 and the explosion-proof valve 300. By the insulating film 500, the explosion-proof valve 300 can be isolated from the electrolyte solution in the inner cavity 110, to prevent the corrosion of the explosion-proof valve 300 due to long time of soaking in the electrolyte solution, prevent the battery from leakage, avoid the increase or decrease of the opening pressure of the explosion-proof valve 300 due to the influence of the electrolyte solution, and enable the explosion-proof valve 300 to be in a stable and reliable working state.

For example, the insulating film 500 may be made of polypropylene (PP) polyethylene (PE) or other polyester compounds.

In some embodiments of the present disclosure, the insulating film 500 is spaced apart from a wall of the gas exhaust passage 150, and the insulating film 500 is gas impermeable. When the gas pressure in other parts in the inner cavity 110 than the gas exhaust passage 150 is small, the gas exhaust passage 150 is not in communication with other parts in the inner cavity 110 than the gas exhaust passage 150. When the gas pressure in the inner cavity 110 increases, the insulating film 500 is pressurized to deform, and the gas in other parts in the inner cavity 110 than the gas exhaust passage 150 can break through the insulating film 500 and enter the gas exhaust passage 150.

In some embodiments of the present disclosure, the insulating film 500 is spaced apart from a wall of the gas exhaust passage 150, and the insulating film 500 is gas permeable. In this case, the gas exhaust passage 150 is in communication with other parts in the inner cavity 110 than the gas exhaust passage 150, and the gas in other parts in the inner cavity 110 than the gas exhaust passage 150 can enter the gas exhaust passage 150 through the insulating film 500.

In some embodiments of the present disclosure, the insulating film 500 can be arranged to directly attach to a wall of the gas exhaust passage 150. In this case, the gas exhaust passage 150 is in communication with other parts in the inner cavity 110 than the gas exhaust passage 150, and the gas in other parts in the inner cavity 110 than the gas exhaust passage 150 can directly enter the gas exhaust passage 150.

In the battery cell 1 according to the embodiment of the present disclosure, the housing 100 is arranged with the inner cavity 110, and the first side wall 120 and the second side wall 130 opposite to each other, the terminal post 200 is arranged on a side wall of the housing 100 other than the second side wall 130, the second side wall 130 is provided with the explosion-proof hole 160, the explosion-proof valve 300 is mounted on the second side wall 130, and the explosion-proof valve 300 is configured to cover the explosion-proof hole 160. Since the terminal post 200 and the explosion-proof hole 160 are arranged on different walls of the housing 100 respectively, the terminal post 200 is spaced apart from the explosion-proof hole 160. In the case of thermal runaway of the battery cell 1, the high-temperature gas or flame ejected from the explosion-proof hole 160 will not burn the terminal post 200, to avoid the secondary harm and provide a high safety performance. Furthermore, the electrode core 400 is arranged in the housing 100, and the electrode core 400 is spaced apart from the explosion-proof hole 160. Therefore, the electrode core 400 will not block the explosion-proof hole 160, and the gas in the gas exhaust passage 150 is in communication with the outside through the explosion-proof hole 160.

In addition, the inner wall surface of the second side wall 130 is configured with the recess 140, and the recess 140 is recessed in a direction facing away from the inner cavity 110. It is to be understood that the inner cavity 110 can accommodate the electrode core 400. The recess 140 is formed by recessing a portion of the second side wall of the housing in related art in a direction away from the first side wall, and the recess 140 will not reduce the space of the inner cavity 110. Namely, the volume of the inner cavity 110 of the battery cell 1 in the embodiment of the present disclosure is the same as that of the inner cavity of the battery cell in related art. The space in the inner cavity 110 is large enough, and the volume of the electrode core 400 can be large, thus ensuring the energy density of the battery cell 1.

Additionally, the recess 140 forms the gas exhaust passage 150 in communication with the inner cavity 110, and the explosion-proof hole 160 is in communication with the gas exhaust passage 150. Other portions of the second side wall 130 than the recess 140 can abut against the electrode core 400. As a result, the recess 140 is spaced apart from the electrode core 400, and the space between the recess 140 and the electrode core 400 can form the gas exhaust passage 150.

Since the explosion-proof valve 300 is arranged on the second side wall 130 at a different side from the terminal post 200, the space between the electrode core 400 and the second side wall 130 is small, and the gas generated by the electrode core 400 cannot be stored. If the recess 140 is not arranged, the gas generated by the electrode core 400 will move to the space between the electrode core 400 and the first side wall 120. When the pressure in the inner cavity 110 reaches the explosion value of the explosion-proof valve 300, the gas in the inner cavity 110 cannot be quickly exhausted through the explosion-proof hole 160, causing a high hazard.

In the present disclosure, by arranging the recess 140, the gas exhaust passage 150 for storing the gas generated by the electrode core 400 is formed. When the pressure in the inner cavity 110 reaches the explosion value of the explosion-proof valve 300, the explosion-proof valve 300 is opened, and the gas exhaust passage 150 is in communication with the outside through the explosion-proof hole 160. In this way, the gas in the battery cell 1 can be quickly discharged from the explosion-proof hole 160, the gas flows smoothly, the gas is exhausted freely, and the explosion-proof effect is better.

Therefore, the battery cell 1 according to the embodiment of the present disclosure has the advantages of high safety, large space and smooth gas flow.

In some specific embodiments of the present disclosure, the terminal post 200 is arranged on the first side wall 120, and the explosion-proof hole 160 is arranged on the second side wall 130. Namely, the terminal post 200 and the explosion-proof hole 160 are arranged at two opposite sides of the housing 100. Therefore, the terminal post 200 and the explosion-proof hole 160 are well spaced apart, and the distance between the terminal post 200 and the explosion-proof hole 160 is large. In the case of thermal runaway of the battery cell 1, the high-temperature gas or flame ejected from the explosion-proof hole 160 will not burn the terminal post 200, to effectively avoid the secondary harm and provide a high safety performance. Furthermore, the electrode core 400 will not block the explosion-proof hole 160, and the gas in the first gas channel 510 is in communication with the outside through the explosion-proof hole 160.

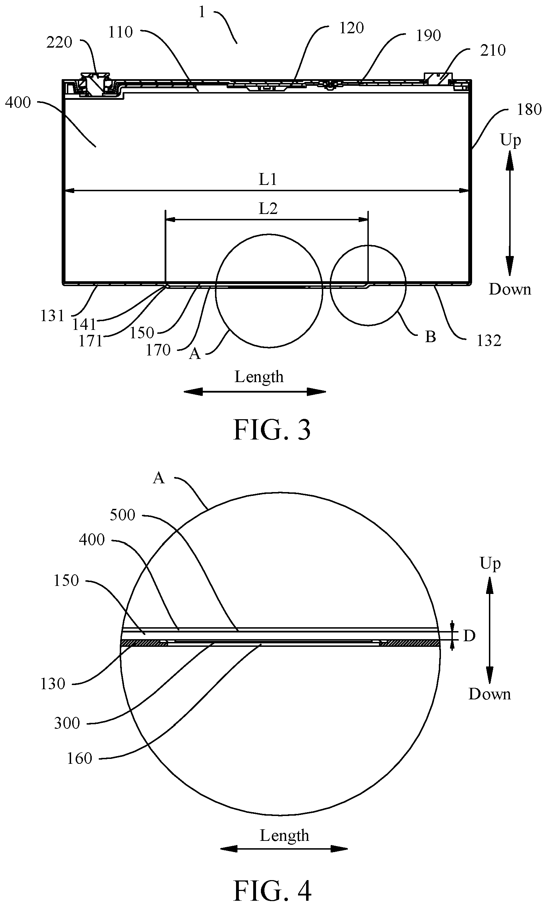

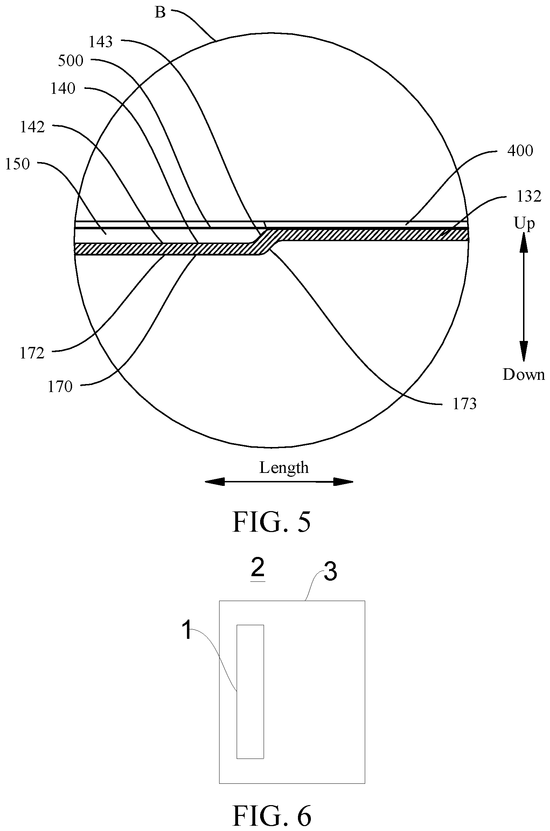

In some specific embodiments of the present disclosure, as shown in FIGs. 3 and 5, the recess 140 has a first inner wall 141, a bottom wall 142 and a second inner wall 143 connected in sequence.

The first inner wall 141 extends from an end away from the bottom wall 142 to an end connected to the bottom wall 142 gradually along a direction away from the first side wall 120. That is, in a direction from the end of the first inner wall 141 away from the bottom wall 142 to the end connected to the bottom wall 142, the distance between the first inner wall 141 and the first side wall 120 gradually increases. The second inner wall 143 extends from an end away from the bottom wall 142 to an end connected to the bottom wall 142 gradually along a direction away from the first side wall 120. That is, in a direction from the end of the second inner wall 143 away from the bottom wall 142 to the end connected to the bottom wall 142, the distance between the second inner wall 143 and the first side wall 120 gradually increases. The extending direction of the bottom wall 142 is the same as the extending direction of the second side wall 130.

For example, in a direction from the first side wall 120 to the second side wall 130, the first inner wall 141 gradually tilts toward a direction approaching the second inner wall 143, and the second inner wall 143 gradually tilts toward a direction approaching the first inner wall 141. Therefore, the recess 140 is configured with a roughly isosceles trapezoid structure, which improves the structural strength of the second side wall 130. Furthermore, the first inner wall 141, the bottom wall 142 and the second inner wall 143 are arranged along a length direction of the second side wall 130.

Furthermore, the first inner wall 141 and the second inner wall 143 serve for connection and transition, and serve to space the bottom wall 142 apart from the electrode core 400, so that there is a gap between the bottom wall 142 and the electrode core 400, whereby the gas exhaust passage 150 in communication with the inner cavity 110 is formed.

In some specific embodiments of the present disclosure, as shown in FIGs. 1 to 5, an outer wall surface of the second side wall 130 is configured with a protrusion 170. The protrusion 170 protrudes in a direction facing away from inner cavity 110, the protrusion 170 corresponds in position to the recess 140, and the explosion-proof hole 160 penetrates through the protrusion 170 and the recess 140.

Namely, corresponding to a portion of the recess 140 recessed in the direction away from the inner cavity 110, the protrusion 170 protrudes in the direction away from inner cavity 110. The thickness of the second side wall 130 at the recess 140 and the protrusion 170 may be large, which improves the structural strength of the second side wall 130 and makes the overall structural strength of the housing 100 higher.

Furthermore, the explosion-proof hole 160 may penetrate the recess 140 and the protrusion170 in a direction perpendicular to the second side wall 130, thereby the inner cavity 110 of the battery cell 1 is in communication with the outside. The extending length of the explosion-proof hole 160 can be the same as the thickness of the second side wall 130. That is, the length of the explosion-proof hole 160 can be shorter, so that the structure is much simple.

In some specific embodiments of the present disclosure, as shown in FIG. 3, the thickness of the second side wall 130 at the protrusion 170 and the recess 140 is the same as that at other positions. This ensures the thickness consistency of the second side wall 130, makes the thickness of the second side wall 130 more uniform, avoids the occurrence of uneven local thickness of the second side wall 130, further improves the structural strength of the second side wall 130, and makes the overall structural strength of the housing 100 higher.

In some specific embodiments of the present disclosure, as shown in FIGs. 2 and 3, the protrusion 170 and the recess 140 are located at a center of the second side wall 130 in the length direction of the second side wall 130.

It can be understood that the electrode core 400 of the battery cell 1 generates gas. By arranging the recess 140 at the center of the second side wall 130 in the length direction, the gas exhaust passage 150 can be located at a center of the electrode core 400 in the length direction. The gas generated by the electrode core 400 can enter the gas exhaust passage 150 more easily. Moreover, the distances from the gas exhaust passage 150 to two ends of the second side wall 130 in the length direction are the same, and the distances from the gas generated by the two ends of the electrode core 400 in the length direction of the second side wall 130 to the gas exhaust passage 150 are the same. There will be no situation that the gas at one side is difficult to enter the gas exhaust passage 150, making the exhaust of gas in the battery cell 1 more smooth.

In addition, such an arrangement makes the structure of the housing 100 symmetrical in the length direction of the second side wall 130 and the housing 100 have the same structural strength at two ends of the second side wall 130 in the length direction. This is beneficial to maintaining the consistency in structural strength of the housing 100.

In some specific embodiments of the present disclosure, as shown in FIGs. 3 and 5, the protrusion 170 has a first side surface 171, a top surface 172 and a second side surface 173 connected in sequence.

The first side surface 171 extends from an end away from the top surface 172 to an end connected to the top surface 172 gradually along a direction away from the first side wall 120. That is, in a direction from the end of the first side surface 171 away from the top surface 172 to the end connected to the top surface 172, the distance between the first side surface 171 and the first side wall 120 gradually increases. The second side surface 173 extends from an end away from the top surface 172 to an end connected to the top surface 172 gradually along a direction away from the first side wall 120. That is, in a direction from the end of the second side surface 173 away from the top surface 172 to the end connected to the top surface 172, the distance between the second side surface 173 and the first side wall 120 gradually increases. The extending direction of the top surface 172 is the same as the extending direction of the second side wall 130.

For example, in the direction from the first side wall 120 to the second side wall 130, the first side surface 171 gradually tilts toward a direction approaching the second side surface 173, and the second side surface 173 gradually tilts toward a direction approaching the first side surface 171. Therefore, the protrusion 170 is configured with a roughly isosceles trapezoid structure, which improves the structural strength of the second side wall 130 and reduces the processing difficulty. Furthermore, the first side surface 171, the top surface 172 and the second side surface 173 are arranged along the length direction of the second side wall 130.

Moreover, the structure of the recess 140 is arranged to correspond to the structure of the protrusion 170, and the thickness of the second side wall 130 is maintained consistent, to avoid the occurrence of uneven local thickness of the second side wall 130 and further improve the structural strength of the second side wall 130.

In some specific embodiments of the present disclosure, as shown in FIG. 2, two opposite side surfaces of the protrusion 170 in a width direction of the second side wall 130 are respectively leveled with two opposite side surfaces of the housing 100 in the width direction of the second side wall 130.

Namely, the dimension of the protrusion 170 in the width direction of the second side wall 130 can be maximized, which increases the dimension of the recess 140 in the width direction of the second side wall 130. In this manner, the gas exhaust passage 150 has a large volume, to accommodate more gas and, provide a better explosion-proof effect. Furthermore, while the volume of the gas exhaust passage 150 is maintained unchanged, if the dimension of the gas exhaust passage 150 in the width direction of the second side wall 130 is large, a small dimension can be set for the gas exhaust passage 150 in the length direction of the second side wall 130, which improves the structural strength of the recess 140 and the protrusion 170, thus improving the structural strength of the second side wall 130.

In addition, the external structures of the protrusion 170 and the housing 100 are more flat, and the overall structure of the housing 100 is much simpler, making the processing more convenient and further improving the overall structural strength of the housing 100.

In some specific embodiments of the present disclosure, as shown in FIGs. 2, 3 and 5, the explosion-proof valve 300 is arranged on the protrusion 170 or the recess 140. The explosion-proof valve 300 can be welded to the protrusion 170 or the recess 140.

For example, the explosion-proof valve 300 can be arranged on the recess 140. In this manner, the explosion-proof valve 300 can be arranged in the inner cavity 110 of the housing 100. As a result, the explosion-proof valve 300 will not protrude from the housing 100, and the housing 100 can protect the explosion-proof valve 300. Alternatively, the explosion-proof valve 300 can be arranged on the protrusion 170. Namely, the explosion-proof valve 300 is arranged outside the housing 100. In this case, the assembly space outside the housing 100 is larger, and the assembly of the explosion-proof valve 300 to the housing 100 is more convenient.

In some specific embodiments of the present disclosure, the battery cell 1 further includes a protective sheet (not shown). The protective sheet is connected to the housing 100, and the protective sheet is located at a side of the explosion-proof valve 300 facing away from the inner cavity 110.

The protective sheet can shield the explosion-proof valve 300. Whether the explosion-proof valve 300 is mounted on the protrusion 170 or on the recess 140, the protective sheet can prevent other parts of the vehicle from direct contact with the explosion-proof valve 300. Moreover, the protective sheet can also protect the explosion-proof valve 300 during the transportation of the battery cell 1, to avoid the damage to the explosion-proof valve 300 due to bumps during transportation, and extend the service life of the battery cell 1.

In some specific embodiments of the present disclosure, as shown in FIG. 4, the depth D of the recess 140 ranges from 0.5 mm to 3 mm. For example, the depth of the recess 140 may be 0.5 mm, 1 mm, 1.5 mm, 2 mm, 2.5 mm or 3 mm.

Therefore, the recess 140 can be configured to have a large depth, whereby the gas exhaust passage 150 has a large space, can accommodate more gas and allows the gas generated by the electrode core 400 to be quickly exhausted for explosion protection. Accordingly, the gas flows more smoothly and the explosion-proof effect is better. Moreover, the depth of the recess 140 cannot be too large, so the space occupied by the recess 140 in the battery cell 1 will not be too large, to avoid large loss of the capacity of the electrode core 400, and allow the battery cell 1 to have a small volume while ensuring that the battery cell 1 has a high energy density.

In some specific embodiments of the present disclosure, as shown in FIG. 3. the dimension of the electrode core 400 in a length direction of the recess 140 is L₁, and the length of the recess 140 is L₂, where L₁ and L₂ meet: 0.04≤L₂/L₁≤0.96. For example, L₂/L₁ may be 0.04, 0.1, 0.2, 0.3, 0.4, 0.5, 0.6, 0.7, 0.8, 0.9or 0.96.

In this way, the recess 140 is avoided to have a too small dimension in the length direction of the electrode core 400, so the gas exhaust passage 150 can have a large dimension in the length direction of the electrode core 400, the gas exhaust passage 150 can have a large space, and the gas can be exhausted freely. Also, the recess 140 is avoided to have a too large dimension in the length direction of the electrode core 400, so other portions of the second side wall 130 than the recess 140 can have a large dimension. These portions can stably support the electrode core 400, to avoid the contact of the electrode core 400 with the bottom wall 142 of the recess 140, and ensure the flow of the gas in the gas exhaust passage.

Further, the dimension L₁ of the electrode core 400 in the length direction of the recess 140 is ≤500 mm, and the length L₂ of the recess 140 is ≥20 mm.

Therefore, the length of the electrode core 400 will not be too large, such that the whole length of the battery cell 1 will not be too large, thus improving the overall structural strength of the battery cell 1. In addition, the length of the recess 140 will not be too short. Accordingly, the length of the gas exhaust passage 150 is kept long enough, so the gas exhaust passage 150 has a large space, and the gas is exhausted more smoothly.

In some specific embodiments of the present disclosure, as shown in FIG. 3, the second side wall 130 has a first support member 131 and a second support member 132. The first support member 131 and the second support member 132 are respectively located at two sides of the recess 140 in the length direction of second side wall 130. The electrode core 400 is supported on the first support member 131 and the second support member 132. The length of each of the first support member 131 and the second support member 132 is (L₁-L₂)/2.

In this way, the gas exhaust passage 150 can be located at the center of the second side wall 130 in the length direction. The gas generated by the electrode core 400 can enter the gas exhaust passage 150 more easily and the gas is exhausted more smoothly from the battery cell 1. Furthermore, the first support member 131 and the second support member 132 have the same length, and the structural strength of the first support member 131 is the same as the structural strength of the second support member 132. That is, the second side wall 130 has consistent structural strength at two ends in the length direction, whereby the first support member 131 and the second support member 132 can support the electrode core 400 more stably and reliably.

In some specific embodiments of the present disclosure, as shown in FIGs. 2 and 3, the explosion-proof hole 160 is located at a center of the electrode core 400 in a thickness direction; and/or, the explosion-proof hole 160 is located at a center of the electrode core 400 in the length direction of the second side wall 130.

For example, the explosion-proof hole 160 can be located at the center of the electrode core 400 in the thickness direction, and at the center of the electrode core 400 in the length direction of the second side wall 130. Generally, the gas is mostly generated at the center of the electrode core 400. By arranging the explosion-proof hole 160 at the center of the electrode core 400, the explosion-proof valve 300 can more effectively sense the gas pressure in the battery cell 1. When the gas pressure in the battery cell 1 is too high, the explosion-proof valve 300 can be immediately opened to exhaust the gas in the battery cell 1, thereby further improving the explosion-proof effect of the battery cell 1.

In some specific embodiments of the present disclosure, as shown in FIGs. 1 and 3, the terminal post 200 includes a positive electrode terminal post 210 and a negative electrode terminal post 220. The housing 100 is an aluminum housing. In this case, the explosion-proof valve 300 is made of aluminum, the positive electrode terminal post 210 is electrically connected to the housing 100, and a difference between the voltage of the positive electrode terminal post 210 and the voltage of the housing 100 ranges from 0 V to 2.5V. The difference between the voltage of the positive electrode terminal post 210 and the voltage of the housing 100 refers to a value obtained by the voltage of the positive electrode terminal post 210 minus the voltage of the housing 100.

It is to be understood that the housing 100 and the explosion-proof valve 300 can be made of metal aluminum or an aluminum alloy, and the electrolyte solution in the battery cell 1 is usually a lithium ion electrolyte solution. Aluminum will react with lithium ions at a low potential to form a metal compound. Therefore, if the voltage difference between the positive electrode terminal post 210 and the housing 100 is small, the voltage of the housing 100 will approximate the voltage of the positive electrode terminal post 210, that is, the potential of the housing 100 is increased. By means of this, the housing 100 and the explosion-proof valve 300 are prevented from being corroded by the lithium ion electrolyte solution, and the housing 100 and the explosion-proof valve 300 mounted on the housing 100 are protected, thus prolonging the service life of the battery cell 1.

Further, a resistor is connected between the positive electrode terminal post 210 and the housing 100. Therefore, even if the positive electrode terminal post 210 and the housing 100 of the battery cell 1 form a loop, for example, when the positive electrode terminal post 210 of the battery cell 1 is connected to a negative electrode of a battery without a resistor and the housing 100 is connected to a positive electrode of the battery, the resistor between the positive electrode terminal post 210 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIGs. 1 and 3, the terminal post 200 includes a positive electrode terminal post 210 and a negative electrode terminal post 220. The housing 100 is a steel housing. In this case, the explosion-proof valve 300 may be made of steel. The negative electrode terminal post 220 is electrically connected to the housing 100, and a difference between the voltage of the housing 100 and the voltage of the negative electrode terminal post 220 ranges from 0V to 2.5V. The difference between the voltage of the housing 100 and the voltage of the negative electrode terminal post 220 refers to a value obtained by the voltage of the housing 100 minus the voltage of the negative electrode terminal post 220.

It is to be understood that steel will react with lithium ions at a high potential to form a metal compound. If the voltage difference between the negative electrode terminal post 220 and the housing 100 is small, the voltage of the housing 100 will approximate the voltage of the negative electrode terminal post 220, that is, the potential of the housing 100 is reduced. By means of this, the housing 100 and the explosion-proof valve 300 are prevented from being corroded by the lithium ion electrolyte solution, and the housing 100 and the explosion-proof valve 300 mounted on the housing 100 are protected, thus further preventing the housing 100 and the explosion-proof valve 300 from being corroded, and prolonging the service life of the battery cell 1.

Further, a resistor is connected between the negative electrode terminal post 220 and the housing 100. Therefore, even if the negative electrode terminal post 220 and the housing 100 of the battery cell 1 form a loop, for example, when the negative electrode terminal post 220 of the battery cell 1 is connected to a positive electrode of a battery without a resistor and the housing 100 is connected to a negative electrode of the battery, the resistor between the negative electrode terminal post 220 and the housing 100 of the battery cell 1 can protect the battery cell 1, to avoid the short circuit of the battery cell 1, and enable the battery cell 1 to have a high safety performance during use.

In some specific embodiments of the present disclosure, as shown in FIGs. 1 to 3, the housing 100 includes a housing body 180 and a housing cover 190.

The second side wall 130 and the inner cavity 110 are formed on the housing body 180, the housing body 180 is provided with an opening facing second side wall 130, and the opening is in communication with the inner cavity 110. The housing cover 190 is mounted to the housing body 180 and the housing cover 190 covers the inner cavity 110. The first side wall 120 is formed on the housing cover 190, and the terminal post 200 is connected to the housing cover 190. By configuring the housing 100 to include separate components, the processing difficulty of the housing 100 is reduced, to simplify the processing steps of the housing body 180 and the housing cover 190, and make the processing more convenient; and also, it is convenient to put the electrode core 400 and the electrolyte solution into the inner cavity 110.

As shown in FIG. 6, a battery pack 2 according to an embodiment in the second aspect of the present disclosure includes a box 3 and the battery cell 1 according to the embodiment in the first aspect of the present disclosure. The battery cell 1 is mounted in the box 3, with the explosion-proof valve 300 facing a bottom wall of the box 3. Therefore, in the case of thermal runaway of the battery cell 1, high-temperature gas or flame can be ejected through the explosion-proof valve 300 to the bottom of the box 3.

The battery pack according to the embodiment of the present disclosure, has the advantages of high safety, smooth gas flow and good explosion-proof effect, by using the battery cell 1.

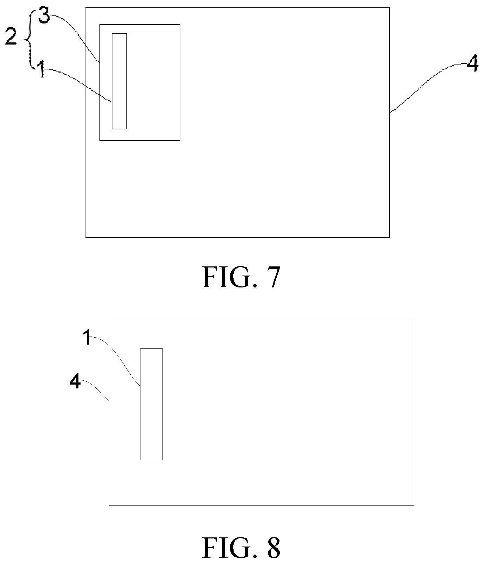

As shown in FIGs. 7 and 8, a vehicle 4 according to an embodiment in the third aspect of the present disclosure includes the battery cell 1 according to the embodiment in the first aspect of the present disclosure or the battery pack 2 according to the embodiment in the second aspect of the present disclosure. The battery pack 2 is mounted to a vehicle body of the vehicle 4 or a chassis of the vehicle 4 by means of the box 3. Alternatively, the vehicle 4 includes the battery cell 1 according to the embodiment in the first aspect of the present disclosure, where the battery cell 1 is mounted to the vehicle body of the vehicle 4 or the chassis of the vehicle 4. That is, the battery cell 1 can be directly mounted to the vehicle body of the vehicle 4 or the chassis of the vehicle 4. Alternatively, the battery cell 1 is mounted in the box 3 and assembled into the battery pack 2, and the battery pack 2 is mounted to the vehicle body of the vehicle 4 or the chassis of the vehicle 4 by means of the box 3.

The vehicle 4 according to the embodiment of the present disclosure has the advantages of high safety, large space and smooth gas flow, by using the battery cell 1 or the battery pack 2.

In some specific embodiments of the present disclosure, the battery cell 1 or the battery pack 2 is mounted to the vehicle body of the vehicle 4 or the chassis of the vehicle 4, with the first side wall 120 located above the second side wall 130.

Therefore, the first side wall 120 may face the interior of the vehicle 4, and the second side wall 130 may face the exterior of the vehicle 4. Namely, the explosion-proof valve 300 may face away from the passenger compartment of the vehicle 4. When the battery cell 1 experiences thermal runaway, high-temperature gas or flame can be ejected through the explosion-proof valve 300 in a direction away from the passenger compartment of the vehicle 4, thus reducing the probability of injury of passengers in the vehicle, and protecting the safety of the passengers in the vehicle.

Other configurations and operations of the battery cell 1, the battery pack 2, and the vehicle 4 according to the embodiments of the present disclosure are known to those of ordinary skill in the art and will not be described in detail herein.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials or characteristics may be combined in any suitable manner in one or more embodiments.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery cell (1), comprising:
a housing (100), the housing (100) having an inner cavity (110) and a first side wall (120) and a second side wall (130) opposite to each other, an inner wall surface of the second side wall (130) being configured with a recess (140), the recess (140) being recessed in a direction facing away from the inner cavity (110), the recess (140) forming an air exhaust passage (150) in the inner cavity (110), and the second side wall (130) being provided with an explosion-proof hole (160) corresponding in position to the air exhaust passage (150);
a terminal post (200), the terminal post (200) being arranged on a side wall of the housing (100) other than the second side wall (130);
an explosion-proof valve (300), the explosion-proof valve (300) being mounted on the second side wall (130), and the explosion-proof valve (300) being configured to cover the explosion-proof hole (160); and
an electrode core (400), the electrode core (400) being arranged in the housing (100), and the electrode core (400) being spaced apart from the explosion-proof hole (160).

2. The battery cell (1) according to claim 1, wherein the recess (140) has a first inner wall (141), a bottom wall (142) and a second inner wall (143) connected in sequence, the first inner wall (141) extends from an end away from the bottom wall (142) to an end connected to the bottom wall (142) along a direction away from the first side wall (120), the second inner wall (143) extends from an end away from the bottom wall (142) to an end connected to the bottom wall (142) along a direction away from the first side wall(120), and an extending direction of the bottom wall (142) is the same as an extending direction of the second side wall (130).

3. The battery cell (1) according to claim 1 or 2, wherein an outer wall surface of the second side wall (130) is configured with a protrusion (170), the protrusion (170) protrudes in a direction facing away from inner cavity (110), the protrusion (170) corresponds in position to the recess (140) and, the explosion-proof hole (160) penetrates through the protrusion (170) and the recess (140).

4. The battery cell (1) according to claim 3, wherein the thickness of the second side wall (130) at the protrusion (170) and the recess (140) is the same as that at other positions.

5. The battery cell (1) according to claim 3 or 4, wherein the protrusion (170) and the recess (140) are located at a center of the second side wall (130) in a length direction of the second side wall (130).

6. The battery cell (1) according to any one of claims 3 to 5, wherein the protrusion (170) has a first side surface (171), a top surface (172) and a second side surface (173) connected in sequence, the first side surface (171) extends from an end away from the top surface (172) to an end connected to the top surface (172) along a direction away from the first side wall (120), the second side surface (173) extends from an end away from the top surface (172) to an end connected to the top surface (172) along a direction away from the first side wall (120), and the extending direction of the top surface (172) is the same as the extending direction of the second side wall (130).

7. The battery cell (1) according to any one of claims 3 to 6, wherein two opposite side surfaces of the protrusion (170) in a width direction of the second side wall (130) are respectively leveled with two opposite side surfaces of the housing (100) in the width direction of the second side wall (130).

8. The battery cell (1) according to any one of claims 3 to 7, wherein the explosion-proof valve (300) is arranged on the protrusion (170) or the recess (140).

9. The battery cell (1) according to any one of claims 1 to 8, further comprising: a protective sheet, the protective sheet being connected to the housing (100), and the protective sheet being located at a side of the explosion-proof valve (300) facing away from the inner cavity (110).

10. The battery cell (1) according to any one of claims 1 to 9, further comprising:
an insulating film (500), the insulating film (500) being arranged in the inner cavity (110), and the insulating film (500) being located between at least a part of the inner cavity (110) and the explosion-proof valve (300).

11. The battery cell (1) according to any one of claims 1 to 10, wherein the dimension of the electrode core (400) in a length direction of the recess (140) is L₁, and the length of the recess (140) is L₂, wherein L₁ and L₂ meet: 0.04≤L2/L1≤0.96.

12. The battery cell (1) according to claim 11, wherein L₁ and L₂ further meet: L₁≤500mm, and L₂≥20mm.

13. The battery cell (1) according to claim 11 or 12, wherein the second side wall (130) has a first support member (131) and a second support member (132), the first support member (131) and the second support member (132) are respectively located at two sides of the recess (140) in the length direction of the second side wall (130), the electrode core (400) is supported on the first support member (131) and the second support member (132), and the length of each of the first support member (131) and the second support member (132) is (L₁-L₂)/2.

14. The battery cell (1) according to any one of claims 1 to 13, wherein a depth of the recess (140) ranges from 0.5 mm to 3 mm.

15. The battery cell (1) according to any one of claims 1 to 14, wherein the explosion-proof hole (160) is located at a center of the electrode core (400) in a thickness direction; and/or,
the explosion-proof hole (160) is located at a center of the electrode core (400) in the length direction of the second side wall (130).

16. The battery cell (1) according to any one of claims 1 to 15, wherein the terminal post (200) comprises a positive electrode terminal post (210) and a negative electrode terminal post (220), the housing (100) is an aluminum housing, the positive electrode terminal post (210) is electrically connected to the housing (100), and a difference between the voltage of the positive electrode terminal post (210) and the voltage of the housing (100) is not less than 0 V and not greater than 2.5 V

17. The battery cell (1) according to any one of claims 1 to 15, wherein the terminal post (200) comprises a positive electrode terminal post (210) and a negative electrode terminal post (220), the housing (100) is a steel housing, the negative electrode terminal post (220) is electrically connected to the housing (100), and a difference between the voltage of the housing (100) and the voltage of the negative electrode terminal post (220) is not less than 0 V and not greater than 2.5 V

18. The battery cell (1) according to any one of claims 1 to 17, wherein the housing (100) comprises:
a housing body (180), wherein the second side wall (130) and the inner cavity (110) are formed on the housing body (180), the housing body (180) is provided with an opening facing the second side wall (130), and the opening is in communication with the inner cavity (110); and
a housing cover (190), wherein the housing cover (190) is mounted to the housing body (180), the housing cover (190) covers the inner cavity (110), the first side wall (120) is formed on the housing cover (190), and the terminal post (200) is connected to the housing cover (190).

19. A battery pack (2), comprising:
a box (3); and
a battery cell (1) according to any one of claims 1 to 18, the battery cell (1) being mounted in the box (3), with the explosion-proof valve (300) facing a bottom wall of the box (3).

20. A vehicle (4), comprising a battery cell (1) according to any one of claims 1 to 18 or a battery pack (2) according to claim 19, with the first side wall (120) being located above the second side wall (130).
